# EUROPÄISCHE PATENTSCHRIFT

(11) **EP 1 290 074 B1**
(45) Veröffentlichungstag und Bekanntmachung des Hinweises auf die Patenterteilung: **30.07.2008**
(21) Anmeldenummer: 01949324.6
(22) Anmeldetag: 09.05.2001
(51) Int. Cl.: C08K 3/36

(54) **MISCHUNGEN WÄSSRIGER BINDEMITTEL**
MIXTURES OF AQUEOUS BINDERS
MELANGES DE LIANTS AQUEUX

(30) Priorität: 22.05.2000 DE 10025304
(43) Veröffentlichungstag der Anmeldung: 12.03.2003
(73) Patentinhaber: Bayer MaterialScience AG, 51368 Leverkusen (DE)
(72) Erfinder: RISCHE, Thorsten, 59423 Unna (DE); SCHÜTZE, Detlef-Ingo, 51519 Odenthal (DE); MEIXNER, Jürgen, 47803 Krefeld (DE); HASSEL, Tillmann, 50259 Pulheim (DE); KOMOREK, Roland, 51381 Leverkusen (DE); SCHMALSTIEG, Lutz, 50676 Köln (DE)
(86) Internationale Anmeldenummer: PCT/EP2001/005243
(87) Internationale Veröffentlichungsnummer: WO 2001/090229

(56) Entgegenhaltungen:
- EP-A- 0 372 957
- US-A- 4 755 425
- US-A- 5 859 118
- US-A- 6 022 919

## Beschreibung

Die Erfindung betrifft kieselsolmodifizierte wässrige Polyurethan-Polyhamstoff Dispersionen und ihre Verwendung als Beschichtungsmittel mit verbesserter Chemikalienbeständigkeit und Wasserdampfdurchlässigkeit sowie verbesserten mechanischen Eigenschaften, insbesondere für den Textil- und Lederbereich.

Bei der Beschichtung von Textilien und Leder werden zunehmend wässrige Systeme eingesetzt. Anforderungen an solche Beschichtungssysteme sind vor allem hohe Beständigkeiten gegen Chemikalien und Wasser, hohe mechanische Belastbarkeit sowie hohe Zug- und Reißfestigkeit und Haftung. Diese Anforderungen werden weitgehend von Polyurethan-Dispersionen erfüllt. Die verschiedenen Möglichkeiten zur Herstellung solcher Dispersionen wurden z. B. von D. Dieterich in einem Übersichtsartikel zusammengefasst [D. Dieterich, Prog. Org. Coatings 9, 281 (1981)].

Wie aus US-A 5 041 494, US-A 5 354 808 und US-A 5 554 686 sowie aus EP-A 0 924231 und EP-A 0 924230 ist, kann die chemische und mechanische Beständigkeit von Beschichtungen aus Polyurethan-Polyharnstoff Dispersionen, im Folgenden PUR-Dispersionen genannt, verbessert werden, wenn die PUR-Dispersionen mit Alkoxysilangruppen modifiziert werden. Aus der US-A 4 755 425 sind reflektierende Folien mit verbesserten schmutz- und wasserabweisenden Eigenschaften bekannt geworden, die aus unter anderem aus Kieselsole enthalten Polyurethan-Dispersionen erhalten werden können.

Eine weitere Verbesserung der Chemikalienbeständigkeit und Härte alkoxysilanmodifizierter PUR-Dispersionen wird in Verbindung mit Kieselsolen erzielt und ist in US-A 5 945 476, US-A 5 952 445, US-A 5 859 118, US-A 5 932 652 sowie EP-A-0 924 232 ausführlich beschrieben.

Die bislang dem Stand der Technik nach bekannten Kombinationen aus alkoxysilanmodifizierten PUR-Dispersionen und Kieselsolen haben jedoch den Nachteil, dass sich die Herstellung der alkoxysilanmodifizierten PUR-Dispersionen im Vergleich zu herkömmlichen Polyurethan Dispersionen sehr viel aufwendiger gestaltet. Weiterhin sind die zur Darstellung der alkoxysilanmodifizierten PUR-Dispersionen benötigten Silane vergleichsweise schwer zugänglich und sehr kostenintensiv, wodurch eine kommerzielle Verwendung nur eingeschränkt auf Spezialbereiche möglich ist.

Der vorliegenden Erfindung lag daher die Aufgabe zugrunde, alternative PUR-Dispersionen für den Bereich der Textil- und Lederbeschichtung bereitzustellen, die zum einen die Vorteile der silanmodifizierten Produkte, nämlich die im Vergleich zu konventionellen PUR-Dispersionen verbesserten Chemikalienbeständigkeiten bei gleich gutem Quellverhalten in Wasser sowie verbesserte mechanische Eigenschaften aufweisen und bei deren Herstellung andererseits auf kostenintensive Prozessschritte mit schwer zugänglichen Ausgangsverbindungen wie Alkoxysilanen, verzichtet werden kann.

Überraschend wurde gefunden, dass auch PUR-Dispersionen, die nicht über Alkoxysilangruppen verfügen, in Kombination mit Kieselsolen dem oben beschriebenen Eigenschaftsprofil entsprechen. Darüber hinaus wurde gefunden, dass diese Dispersionen im Vergleich zu konventionellen PUR-Dispersionen unter anderem eine deutlich verbesserte Wasserdampfdurchlässigkeit aufweisen und deren Glanzstufen sich nicht ändern. Darüber hinaus sind die erfindungsgemäßen Dispersionen leichter als die dem Stand der Technik (DE 4 236 569A1) nach bekannten wasserdampf durchlässigen PUR-Beschichtungsmittel zugänglich und weisen eine bessere Wasserdampfdurchlässigkeit bei gleich gutem Quellverhalten in Wasser auf.

Gegenstand der Erfindung ist daher die Verwendung von Bindemittelzusammensetzungen aus einer Kombination von
40 - 95 %, bevorzugt 50 - 90 % und besonders bevorzugt 60 - 85 % einer PUR-Dispersion (A)
und
5 - 60 %, bevorzugt 10 - 50 % und besonders bevorzugt 15 - 40 % einer Kieselsol Dispersion (B),
wobei gilt, dass die Prozentangaben sich auf das Gewicht nichtflüchtiger Anteile beziehen und zu 100 Gew.-% addieren, zur Herstellung wasserdampfdurchlässiger Schichten, vorzugsweise auf flexiblen Substraten.

Gegenstand der Erfindung ist besonders bevorzugt die Verwendung der beschriebenen Beschichtungsmittel als Bindemittel für Textilien und Leder.

Prinzipiell geeignet sind grundsätzlich alle nicht alkoxysilanmodifizierten PUR-Dispersionen des Stands der Technik. Die erfindungsgemäße PUR-Dispersionen (A) sind im allgemeinen aufgebaut aus:
A1. Polyisocyanaten,
A2. polymeren Polyolen mit mittleren Molgewichten von 400 bis 6000,
A3. gegebenenfalls Monoalkoholen oder Monoaminen,
A4. Polyolen, Aminopolyolen oder Polyaminen mit einem Molgewicht unter 400,
   wobei bevorzugt eine oder mehrere der Verbindungen (A3) und/ oder (A4) eine ionische Gruppe enthält oder zur Ausbildung einer ionischen Gruppe befähigt ist. Diese ionische Gruppe kann kationisch oder bevorzugt anionisch sein. Der Einbau von Verbindungen dieser Produktklasse mit z. B. freien Carboxygruppen in das Polyurethan bedeutet, daß diese Gruppierungen durch Neutralisation in ionische Gruppen überführt werden können, d. h. sie sind zur Ausbildung einer ionischen Gruppe befähigt und
A 5. Polyoxyalkylenether mit mindestens einer Hydroxy- oder Aminogruppe.

Geeignete Diisocyanate (A1) sind grundsätzlich solche des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan, 1,5-Diisocyanatonaphthalin oder beliebige Gemische solcher Diisocyanate.

Bevorzugt handelt es sich um Polyisocyanate oder Polyisocyanatgemische der genannten Art mit ausschließlich aliphatisch und/oder cycloaliphatisch gebundenen Isocyanatgruppen. Ganz besonders bevorzugte Ausgangskomponenten (A1) sind Polyisocyanate bzw. Polyisocyanatgemische auf Basis von HDI, IPDI und/oder 4,4'-Diisocyanatodicyclohexylmethan.

Weiterhin geeignet als Polyisocyanate (A1) sind beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Iminooxadiazindion- und/oder Oxadiazintrionstruktur, wie sie beispielsweise in J. Prakt. Chem. 336 (1994) 185 - 200, DE-A-1 670 666, DE-A-1 954 093, DE-A-2 414 413, DE-A-2 452 532, DE-A-2 641 380, DE-A-3 700 209, DE-A-3 900 053 und DE-A-3 928 503 oder EP-A-0 336 205, EP-A-0 339 396 und EP-A-0 798 299 beispielhaft beschrieben sind.

Die polymeren Polyole (A2) in dem Molgewichtsbereich von 400 - 6000 sind die üblichen wie sie für Polyurethane bereits seit langem eingesetzt werden, mit einer OH-Funktionalität von mindestens 1,8 bis ca. 4 wie zum Beispiel Polyacrylate, Polyester, Polylactone, Polyether, Polycarbonate, Polyestercarbonate, Polyacetale, Polyolefine und Polysiloxane. Bevorzugt verwendet werden Polyole in einem Molgewichtsbereich von 600 bis 2500 mit einer OH-Funktionalität von 2 bis 3.

Neben dem Einsatz difunktioneller OH-Komponenten kommt, wie aus der Literatur bekannt, auch die Terminierung des Polyurethan-Prepolymers mit einem monofunktionellen Alkohol (A3) in Betracht. Geeignete Monoalkohole (A3) sind bevorzugt aliphatische Monoalkohole mit 1-18 C-Atomen wie zum Beispiel Ethanol, n-Butanol, Ethylenglykol-monobutylether, 2-Ethylhexanol, 1-Octanol, 1-Dodecanol, oder 1-Hexadecanol.

Polyole, Aminopolyole oder Polyamine mit einem Molgewicht unter 400 (A4), die als Kettenverlängerer in Polyurethanen bzw. Polyurethan-Dispersionen Verwendung finden können, sind in der entsprechenden Literatur ebenfalls in großer Zahl beschrieben. Als Beispiel seien genannt: Ethandiol, 1,4-Butandiol, Cyclohexandimethanol, Trimethylolpropan, Glycerin sowie Hydrazin, Ethylendiamin, 1,4-Diaminobutan, Isophorondiamin, Diethylentriamin und 4,4-Diaminodicyclohexylmethan.

Weiterhin können die erfindungsgemäßen Polyurethandispersionen hydrophile Polyoxyalkylenether (A5) mit mindestens einer Hydroxy- oder Aminogruppe enthalten. Diese Polyether enthalten einen hohen Anteil (ca. 30 Gew.-% bis 100 Gew.-%) an Bausteinen, die vom Ethylenoxid abgeleitet sind. In Frage kommen linear aufgebaute Polyether einer Funktionalität zwischen 1 und 3, aber auch Verbindungen der allgemeinen Formel I 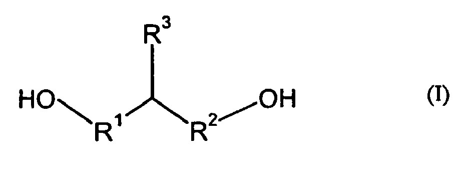 wobei R¹ und R² unabhängig voneinander jeweils einen zweiwertigen aliphatischen, cycloaliphatischen oder aromatischen Rest mit 1 bis 18 C-Atomen, die durch Sauerstoff und / oder Stickstoffatome unterbrochen sein können, bedeuten und R³ für einen nicht-hydroxyterminierten Polyester oder bevorzugt Polyether steht. Besonders bevorzugt steht R³ für einen alkoxyterminierten Polyethylenoxidrest.

Die Hydroxy-Komponenten (A2), (A3) und (A4) können Doppelbindungen enthalten, die z. B. aus langkettigen aliphatischen Carbonsäuren oder Fettalkoholen stammen können. Eine Funktionalisierung mit olefinischen Doppelbindungen ist z. B. durch den Einbau allylischer Gruppen oder von Acrylsäure oder Methacrylsäure sowie deren jeweiligen Estern möglich.

Komponenten (A3) bzw. (A4), die eine ionische Gruppen enthalten oder zur Ausbildung einer ionischen Gruppe befähigt sind, sind z. B. Dimethylolpropionsäure, Hydroxypivalinsäure, das Natriumsalz der 2-(2-Amino-ethylamino)-ethansulfonsäure, Polyethersulfonat, das propoxylierte Addukt aus 2-Butendiol und NaHSO₃ sowie in kationische Gruppen überführbare Bausteine wie N-Methyl-diethanolamin. Bevorzugt werden solche Komponenten (A3) bzw. (A4) eingesetzt, die über Carboxy- oder Carboxylat- und/oder Sulfonatgruppen verfügen.

Die Herstellung der wäßrigen Polyurethan-Dispersionen (A) erfolgt in der bekannten üblichen Art: Man läßt die Polyisocyanatkomponente mit polymerem Polyol und niedermolekularen Kettenverlängerern zu einem Polyurethan ausreagieren, wobei ggf. und vorteilhaft ein Lösungsmittel mitverwendet wird, das später ggf. wieder abgetrennt werden kann. Als Lösemittel geeignet sind die an sich bekannten üblichen Lacklösemittel, wie z. B. Ethylacetat, Butylacetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, Mischungen, die vor allem höher substituierte Aromaten enthalten, wie sie beispielsweise unter den Bezeichnungen Solvent Naphtha, Solvesso^{®} (Exxon), Cypar^{®} (Shell), Cyclo Sol^{®} (Shell), Tolu Sol^{®} (Shell), Shellsol^{®} (Shell) im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton, ε-Methylcaprolacton, Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

In einem weiteren Schritt werden anschließend zur Neutralisation befähigte Gruppen in die Salzform überführt und mit Wasser die Dispersion erzeugt. Je nach Neutralisationsgrad und Gehalt ionischer Gruppen kann die Dispersion sehr feinteilig eingestellt werden, so daß sie praktisch das Aussehen einer Lösung hat, aber auch sehr grobteilige Einstellungen sind möglich, die ebenfalls ausreichend stabil sind. Vorteilhaft sind jedoch niedrige mittlere Teilchengrößen von< 300 nm bzw. hohe Anteile hydrophiler Gruppen, da dies die Emulgierung des Polyisocyanats und damit die Qualität des Lackfilms verbessert. Auch der Feststoffgehalt kann in weiten Grenzen von z. B. 20 - 60 % variiert werden.

Die erfindungsgemäßen kieselsolmodifizierten PUR-Dispersionen enthalten im Polyurethan-Teil (A) bevorzugt einen Festkörperanteil von 20 - 60 % und besonders bevorzugt von 30 - 50 %.

Die erfindungsgemäßen kieselsolmodifizierten PUR-Dispersionen sind bevorzugt aufgebaut aus PUR-Dispersionen (A), die nach dem literaturbekannten Acetonverfahren hergestellt worden sind.

Überschüssige Isocyanatgruppen werden dann durch Umsetzung mit polyfunktionellen isocyanatreaktiven Verbindungen zur Reaktion gebracht (Kettenverlängerung). Hierzu werden bevorzugt Wasser oder die bereits unter (A4) genannten Polyamine, besonders bevorzugt Di- sowie Triamine, Hydrazin und das Natriumsalz der 2-(2-Amino-ethylamino)-ethansulfonsäure eingesetzt. Auch die Terminierung mit einem Monoamin wie z. B. Diethylamin, Dibutylamin, Ethanolamin, N-Methylethanolamin oder N,N-Diethanolamin ist möglich.

Weiterhin ist es möglich, die erfindungsgemäßen kieselsolmodifizierten Polyurethan-Dispersionen durch Polyacrylate zu modifizieren. Hierzu wird in Gegenwart der Polyurethan-Dispersion eine Emulsionspolymerisation von olefinisch ungesättigten Monomeren, z. B. Estern aus (Meth)acrylsäure und Alkoholen mit 1-18 C-Atomen, Styrol, Vinylestern oder Butadien durchgeführt, wie es zum Beispiel in DE-A-1 953 348, EP-A-0 167 188, EP-A-0 189 945 und EP-A-0 308 115 beschrieben ist. Die Monomere enthalten eine oder mehrere olefinische Doppelbindungen. Daneben können die Monomere funktionelle Gruppen wie Hydroxyl-, Epoxy-, Methylol- oder Acetoacetoxygruppen enthalten. Die Emulsionspolymerisation kann vor oder nach der Modifikation mit Kieselsolen erfolgen.

Zur Anwendung werden die erfindungsgemäßen Polyurethan-Dispersionen entweder allein oder in Kombination mit anderen wäßrigen Bindemitteln eingesetzt. Solche wäßrigen Bindemittel können z. B. aus Polyester-, Polyacrylat, Polyepoxid- oder Polyurethanpolymeren aufgebaut sein. Auch die Kombination mit strahlenhärtbaren Bindemitteln, wie sie z. B. in der EP-A-0 753 531 beschrieben sind, ist möglich.

### Kieselsole (B):

Erfindungsgemäße Kieselsole sind kolloidale Lösungen von amorphen Siliciumdioxid in Wasser. Sie werden durch Neutralisation von Wasserglas, wie z.B. beschrieben in Ullmanns Encyklopädie der technischen Chemie (Bd. 21, 4. Auflage, Verlag Chemie, Weinheim, 1982, Kapitel 5, S. 456 ff.), erhalten. Kieselsole sind beispielweise unter den Markennamen Levasil^{®} (Bayer AG), Ludox® (DuPont), Nalcoag^{®} (Nalco), Snowtex® (Nissan) kommerziell erhältlich. Die SiO₂-Partikel weisen Durchmesser zwischen 1-150 nm auf. In den erfindungsgemäßen Dispersionen finden bevorzugt Kieselsole Verwendung, deren SiO₂-Partike einen Durchmesser zwischen 5 und 100 nm aufweisen. Besonders bevorzugt finden Kieselsole mit einem mittleren SiO₂-Partikeldurchmesser von 7 bis 50 nm Verwendung. Kieselsole können sowohl basisch (pH > 7) als auch sauer (pH < 7) eingestellt sein. Die Festkörpergehalt von Kieselsolen liegt gewöhnlich zwischen 1-60 %, bevorzugt 20-40 % und besonders bevorzugt 25-35 %. Bei nichtionisch und/oder ionisch hydrophillierten PUR-Dispersionen ist die Verwendung von basischen Kieselsol-Typen bevorzugt.

Erfindungsgemäße Beschichtungsmittel können durch Mischung einer PUR-Dispersion (A) und einem Kieselsol (B) nach allen bekannten Mischtechniken hergestellt werden.

Die erfindungsgemäßen kieselmodifizierten PUR-Dispersionen enthalten einen Anteil von 40 - 95 % einer PUR-Dispersion (A) und einen Anteil von 5 - 60 % einer Kieselsoldispersion (B), wobei gilt, dass die Prozentangaben sich auf das Gewicht nichtflüchtiger Anteile beziehen und zu 100 Gew.-% addieren.

In einer bevorzugten Ausführungsform einen Anteil von 50 - 90 % einer PUR-Dispersion (A) und einen Anteil von 10 - 50 % einer Kieselsoldispersion (B), wobei gilt, dass die Prozentangaben sich auf das Gewicht nichtflüchtiger Anteile beziehen und zu 100 Gew.-% addieren.

Besonders bevorzugt enthalten die erfindungsgemäßen Dispersionen einen Anteil von 60-85 % einer PUR-Dispersion (A) und einen Anteil von 15-40 % einer Kieselsoldispersion (B), wobei gilt, dass die Prozentangaben sich auf das Gewicht nichtflüchtiger Anteile beziehen und zu 100 Gew.-% addieren.

Ein besonders bevorzugtes Herstellverfahren der erfindungsgemäßen Dispersionen ist die Möglichkeit, die Kieselsole während der PUR-Dispersionsherstellung einzubringen. Das nach einem der bekannten Herstellungsmethoden synthetisierte Prepolymer wird hierzu in Kieselsol bzw. einer Kieselsol/Wasser-Mischung anstelle von reinem Wasser dispergiert. Hierdurch ist eine Reduktion der Verfahrenskosten um den anschließenden Abmischschritt sowie der Anlagenkosten um den Anteil einer Abmischeinrichtung möglich.

Weiterhin ist es möglich, vor Applikation Vernetzer zuzusetzen. Hierfür geeignet sind bevorzugt hydrophile bzw. hydrophilierte Polyisocyanatvernetzer.

Die erfindungsgemäßen kieselsolmodifizierten PUR-Dispersionen werden als Bindemittel in Beschichtungen und Klebstoffen verwendet. Beschichtungen auf Basis der erfindungsgemäßen PUR-Dispersionen können z.B. auf Metall, Kunststoff, Papier, Leder, Textilien, Filz, Holz, Glas, Glasfasern, mineralische Untergründe eingesetzt werden. Eine besonders bevorzugte Anwendung ist die Beschichtung von Textilien und Leder.

Die kieselsolmodifizierten PUR-Dispersionen können als solche oder in Kombination mit den aus der Lacktechnologie bekannten Hilfs- und Zusatzmitteln wie z. B. nichtionischen und/oder anionischen Verdickern, Füllstoffen, Pigmenten, Wachsen, Griffmitteln, Farbstoffen, Lösungsmitteln, Verlaufshilfsmitteln zur Herstellung von Beschichtungen verwendet werden.

Der Auftrag der Beschichtungsmaterialien kann auf bekannte Weisen, z. B. durch Streichen, Gießen, Rakeln, Spritzen, Walzen oder Tauchen erfolgen. Die Trocknung des Lackfilms kann bei Raumtemperatur oder erhöhter Temperatur, aber auch durch Einbrennen bei bis zu 200°C erfolgen.

Die erfindungsgemäßen Dispersionen eignen sich besonders zur Beschichtung bzw. zum Überziehen und zum Imprägnieren von gewebten und nichtgewebten Textilien.

Die erfindungsgemäßen Dispersionen dienen zur Herstellung wasserdampfdurchlässsig beschichteter flexibler Substrate, besonders Leder und Textil.

Als Substrate kommen vorzugsweise flexible Materialien, insbesondere Textil und Leder in Frage.

Die erfindungsgemäß zu verwendenden Dispersionen sind lager- und versandfähig und können zu einem beliebig späteren Zeitpunkt verarbeitet werden. Je nach der gewählten chemischen Zusammensetzung des Polyurethans und nach Gehalt an Kieselsol erhält man Beschichtungen mit unterschiedlichen Eigenschaften. So können weiche klebrige Schichten, thermoplastische und gummielastische Produkte der verschiedensten Härtegrade bis zu glasharten Duroplasten erhalten werden.

Die erfindungsgemäß zu verwendenden Dispersionen werden in der Regel ohne weitere Zusätze auf das Substrat aufgebracht. Dies kann durch direktes Streichen auf das Substrat mit Hilfe von Rakelmessern, Walzen oder Drahtrakeln erfolgen.

In der Regel werden mehrere Striche hintereinander, bevorzugt jedoch zwei, aufgebracht, so dass die Gesamtdicke der Beschichtung aus Grund- und Deckstrich(en) 10 bis 100 µm, bevorzugt 20 bis 60 µm, beträgt. Als Grundstrich kann auch eine zu einer mikroporösen Schicht auftrocknende Paste verwendet werden, wie es in DE-A 2 020 153 beschrieben ist. Der anschließend aufgebrachte Deckstrich schützt den gesamten Verbund gegen mechanische Beanspruchung und Abrieb.

Das Aufbringen des Beschichtungsverbundes aus Grund- und Deckstrich ist aber auch nach dem sogenannten Umkehrverfahren möglich. Hierbei wird zunächst der Deckstrich auf einen Trennträger aufgetragen und getrocknet. Nach dem Auftragen eines zweiten Grund- oder Haftstriches wird das Substrat in die noch feuchte Schicht leicht eingedrückt. Nach dem Trocknen entsteht ein fester Verbund aus Beschichtung und Substrat, der vom Trennträger gelöst wird und in seinem Aufbau weitgehend dem der vorher beschriebenen Direktbeschichtung entspricht.

### Beispiele:

### Eingesetzte Substanzen:

A. Impranil^{®} DLN (Bayer AG): 40 %ige anionische aliphatische Polyesterpolyurethan-Dispersion mit folgenden Eigenschaften (DIN 53504): 100 % Modul: 2 MPa; Zugfestigkeit: 20 MPa; Bruchdehnung: 700 %.
B. Impranil^{®} DLN-SD (Bayer AG): 40 %ige anionische aliphatische Polyesterpolyurethan-Dispersion mit folgenden Eigenschaften (DIN 53504): 100 % Modul: 2 MPa; Zugfestigkeit: 20 MPa; Bruchdehnung: 700 %.
C. Impranil^{®} DLP (Bayer AG): 50 %ige anionische aliphatische Polyesterpolyurethan-Dispersion mit folgenden Eigenschaften (DIN 53504): 100 % Modul: 1,3 MPa; Zugfestigkeit: 15 MPa; Bruchdehnung: 650 %.
D. Impranil^{®} DLV (Bayer AG): 40 %ige anionische aliphatische Polyesterpolyetherpolyurethan-Dispersion mit folgenden Eigenschaften (DIN 53504): 100 % Modul: 2,5 MPa; Zugfestigkeit: 20 MPa; Bruchdehnung: 500 %.
E. Levasil^{®}100/30 (Bayer AG): 30 %ige anionische Kieselsoldispersion mit folgenden Eigenschaften: Spezifische Oberfläche: 100 m²/g; mittlere Teilchengröße: 30 nm; pH = 10.
F. Levasil® 200/30 (Bayer AG): 30 %ige anionische Kieselsoldispersion mit folgenden Eigenschaften: Spezifische Oberfläche: 200 m²/g; mittlere Teilchengröße: 15 nm; pH = 9.
G. Levasil^{®} 300/30 (Bayer AG): 30 %ige anionische Kieselsoldispersion mit folgenden Eigenschaften: Spezifische Oberfläche: 300 m²/g; mittlere Teilchengröße: 9 nm; pH = 10.
H. Levasil^{®} VP AC 4038 (Bayer AG): 30 %ige anionische Kieselsoldispersion mit folgenden Eigenschaften: Spezifische Oberfläche: 200 m²/g; mittlere Teilchengröße: 15 nm; pH = 9.
I. Bayderm® Vorgrund APV (Bayer AG): 20 %ige aromatische, anionische, weiche Polyether - Polyurethandispersion mit folgenden Eigenschaften: 100 % Modul: 0,4 MPa; Zugfestigkeit 5,7 MPa bei 1150 % Dehnung.
J. Euderm^{®} Grundschwarz D-C (Bayer AG): Formulierung enthaltend 26 % Ruß, 0,2 % eines Schichtsilikats sowie 8,6 % einer mit Ethanolamin neutralisierten Polyacrylsäure.
K. Euderm^{®} Filler VF01 (Bayer AG): Verlaufshilfsmittel, enthaltend 2,5 % eines Schichtsilikats , 1,5 % eines nicht funktionellen Silikons, sowie 1,5 % Klauenöl und 3,3 % Casein. Die Formulierung ist mit Ammoniak alkalisch gestellt.
L. Bayderm^{®} Soft Q (Bayer AG): Antiklebemittelemulsion, enthaltend 5 % Wollfett, 20 % assoziativen Polyurethanverdicker, sowie 1 % hochsiedenden Aromatenverschnitt.
M. Primal^{®} Dispersion 32 A (Rohm and Haas): 35 %ig mit folgenden Eigenschaften: 100 % Modul 0,3 MPa, Zugfestigkeit 4,0 MPa bei 880 % Dehnung.
N. Bayderm^{®} Grund 50 DU (Bayer AG): Mittelharte 40 %ige aliphatisch - aromatische Polyester - Polyurethandispersion mit folgenden Eigenschaften: 100 % Modul 4,7 MPa; Zugfestigkeit 33 MPa bei 600 % Dehnung.
O. Euderm® Mattierung SN (Bayer AG): Handelsübliches trockenstellendes Mattierungsmittel; enthaltend 19 % einer Fällungskieselsäure mit mittlerer Teilchengröße von 4,3 µm.
P. Vernetzer: 50 %ige Lösung bestehend aus Desmodur N 3100 in Propylenglykoldiacetat; NCO - Gehalt 8,6 % , NCO - Funktionalität 2,8.
Q. Bayderm® Finish DLF (Bayer AG): Sehr harte (Shore A > 90) 40 %ige aliphatische Polyester - PUR - Dispersion für Appreturen mit folgenden Filmdaten: 100% Modul 17,5 MPa; Zugfestigkeit 42,1 MPa bei 560% Dehnung.
R. Bindemittel nach folgender Herstellvorschrift:
   In einem 21-Kolben werden 500 g Hexamethylendiisocyanat (HDI) und 1,25 g Phosphorsäuredibutylester vorlegt. Unter Rühren werden 615 g Trimethylolpropan - gestarteter Ethylenoxid (EO)/Propylenoxid (PO)- Copolyether (62,5 Gew.-% PO; 17,5 Gew.-% EO, wobei der Ethylenoxidanteil als endständiger Block vorliegt; Kenndaten: Mn: 4800; OHZ: 35; F: 3) zugegeben. Es wird auf 100 °C Innentemperatur erhitzt und bei dieser Temperatur 30 min gerührt. Der Ansatz wird auf 80 °C gekühlt. Es werden 500 g eines Propylenglykol - gestarteten Etylenoxid / Propylenoxid - Copolyethers (50 Gew.-% PO; 50 Gew.-% EO; wobei 19 % des EO-Anteils als endständiger Block vorliegen; Kenndaten: Mn: 2000, OHZ: 56, F: 3) zugegeben, wobei die Temperatur wieder auf 100 °C steigt. Es wird bei 100 °C gerührt, bis der NCO-Gehalt auf 13 % gefallen ist. Nach Zugabe von weiteren 0,6 g Phosphorsäuredibutylester wird das Produkt bei 50 mbar und 160 °C einer Dünnschichtdestillation unterworfen, um den Überschuß an HDI abzutrennen.
   Es resultiert ein niedrigviskoses Harz mit einem NCO-Gehalt von 3,06 % (Vorprodukt). In 250 g dieses Harzes werden mit 16 g eines Isocyanats (Gemisch aus Isocyanurat/Uretdion des Hexamethylendiisocyanats, mit 15 Gew.-% Uretdion; NCO-Gehalt 22 %) eingerührt.
   Das resultierende Produkt hat einen NCO-Gehalt von 4,2 %; eine Viskosität von 2400 mPa s (22 °C) und ein Äquivalentgewicht von 1000 g pro Val NCO.
S. Härter: Formulierung von Isophorondiamin in Butanon, enthaltend 2,17 % Wasser; 600 g Härter entsprechen 1Val NH₂.

### Herstellbeispiele:

### 1.) Kieselsolmodifizierte PUR-Dispersion (PUR 1)

In einem Reaktionsgefäß mit Rührer, Tropftrichter und Rückflußkühler werden 337,5 g PUR-Dispersion **A** vorgelegt und 112,5 g Kieselsol-Dispersion **E** innerhalb von 10 min unter Rühren zugetropft. Anschließend wird weitere 30 min bei Raumtemperatur gerührt.

### 2.) IGeselsolmodifizierte PUR-Dispersion (PUR 2)

Durchführung analog 1.) jedoch 300,0 g PUR-Dispersion **A** und 150,0 g Kieselsol-Dispersion **E.**

### 3.) Kieselsolmodifizierte PUR-Dispersion (PUR 3)

Durchführung analog 1.) jedoch 225 g PUR-Dispersion **A** und 225 g Kieselsol Dispersion **E.**

### 4a.) Kieselsolmodifizierte PUR-Dispersion (PUR 4a)

Durchführung analog 1.) jedoch 360,0 g PUR-Dispersion **B** und 90,0 g Kieselsol-Dispersion **E.**

### 4b) Kieselsolmodifizierte PUR-Dispersion (PUR 4b)

Durchführung analog 1.) jedoch 360,0 g PUR-Dispersion **A** und 90,0 g Kieselsol-Dispersion **E.**

### 5.) Kieselsolmodifizierte PUR-Dispersion (PUR 5)

Durchführung analog 1.) jedoch 360,0 g PUR-Dispersion **B** und 90,0 g Kieselsol-Dispersion **F.**

### 6.) Kieselsolmodifizierte PUR-Dispersion (PUR 6)

Durchführung analog 1.) jedoch 360,0 g PUR-Dispersion **B** und 90,0 g Kieselsol-Dispersion **G.**

### 7.) Kieselsolmodifizierte PUR-Dispersion (PUR 7)

Durchführung analog 1.) jedoch 360,0 g PUR-Dispersion **B** und 90,0 g Kieselsol-Dispersion **H.**

### 8.) Kieselsolmodifizierte PUR-Dispersion (PUR 8)

In einem Reaktionsgefäß mit Rührer, Tropftrichter und Rückflußkühler werden 360,0 g PUR-Dispersion **C** und 171,8 g destilliertes Wasser vorgelegt und 90,0 g Kieselsol-Dispersion **E** innerhalb von 10 min unter Rühren zugetropft. Anschließend wird weitere 30 min bei Raumtemperatur gerührt.

### 9.) Kieselsolmodifizierte PUR-Dispersion (PUR 9)

Durchführung analog 8.) jedoch 337,5 g PUR-Dispersion **C,** 161,0 g destilliertes Wasser und 112,5 g Kieselsol-Dispersion **E.**

### 10.) Kieselsolmodifizierte PUR-Dispersion (PUR 10)

Durchführung analog 8.) jedoch 300,0 g PUR-Dispersion **C**, 143,1 g destilliertes Wasser und 150,0 g Kieselsol-Dispersion **E**.

### 11.) Kieselsolmodifizierte PUR-Dispersion (PUR 11)

Durchführung analog 1.) jedoch 225,0 g PUR-Dispersion **C,** 107,4 g destilliertes Wasser und 225,0 g Kieselsol-Dispersion **E.**

### 12.) Kieselsolmodifizierte PUR-Dispersion (PUR 12)

Durchführung analog 1.) jedoch 666,6 g PUR-Dispersion **D,** 114,2 g destilliertes Wasser und 133,4 g Kieselsol-Dispersion **G.**

### 13.) Kieselsolmodifizierte PUR-Dispersion (PUR 13)

Durchführung analog 8.) jedoch 640,0 g PUR-Dispersion **D,** 109,7 g destilliertes Wasser und 160,0 g Kieselsol-Dispersion **G.**

### 14.) Kieselsolmodirizierte PUR-Dispersion (PUR 14)

Durchführung analog 8.) jedoch 600,0 g PUR-Dispersion **D,** 102,9 g destilliertes Wasser und 200,0 g Kieselsol-Dispersion **G.**

### 15.) Kieselsolmodifizierte PUR-Dispersion (PUR 15)

Durchführung analog 8.) jedoch 533,4 g PUR-Dispersion **D,** 91,4 g destilliertes Wasser und 266,6 g Kieselsol-Dispersion **G.**

### 16.) Kieselsolmodifizierte PUR-Dispersion (PUR 16)

Durchführung analog 8.) jedoch 400,0 g PUR-Dispersion **D,** 68,6 g destilliertes Wasser und 400,0 g Kieselsol-Dispersion **G.**

### 17.) Kieselsolmodifizierte PUR-Dispersion (PUR 17)

Durchführung analog 8.) jedoch 640,0 g PUR-Dispersion **D,** 109,7 g destilliertes Wasser und 160,0 g Kieselsol-Dispersion **H.**

### Anwendungstechnischer Teil:

### Textil:

Die Eigenschaften von PUR-Dispersionen für die Textilbeschichtung werden an freien Filmen bestimmt, die wie folgt hergestellt werden:

In einem Filmziehgerät, bestehend aus zwei polierten Walzen, die auf einen exakten Abstand eingestellt werden können, wird vor die hintere Walze ein Trennpapier eingelegt. Mit einer Fühlerblattlehre wird der Abstand zwischen Papier und vorderer Walze eingestellt. Dieser Abstand entspricht der Filmdicke (nass) der resultierenden Beschichtung, und kann auf die gewünschte Auflage jedes Striches eingestellt werden. Die Beschichtung ist auch konsekutiv in mehreren Strichen möglich. Zum Aufbringen der einzelnen Striche werden die Produkte (wässrige Formulierungen werden vorher durch Zugabe von Ammoniak/ Polyacrylsäure auf eine Viskosität von 4500 mPa s gestellt) auf den Spalt zwischen Papier und vorderer Walze gegossen, das Trennpapier wird senkrecht nach unten weggezogen, wobei auf dem Papier der entsprechende Film entsteht. Sollen mehrere Striche aufgebracht werden, wird jeder einzelne Strich getrocknet und das Papier erneut eingelegt.

Die Bestimmung des E-Modul, erfolgte nach DIN 53504 an Filmen > 100 µm Stärke.

Die Bestimmung der mittleren Teilchengrößen (angegeben ist das Zahlenmittel) der PUR-Dispersionen erfolgte mittels Laserkorrelations-Spektroskopie (Gerät: Malvem Zetasizer 1000, Malver Inst. Limited).

Die Essigesterquellung wurde nach 2 Stunden Lagerung in Ethyacetat durch Differenzmessung von Länge und Breite berechnet.

Die Wasserdampfdurchlässigkeiten (WDD) werden nach den Maßgaben gemessen, wie sie in der Druckschrift DS 2109 TM1, der British Textile Technology Group, Manchester, England, hinterlegt sind.

**Tabelle 1: Polyurethan A / Kieselsol E Abmischungen mit unterschiedlichen Kieselsolanteilen**

| | **PUR A** | **PUR 1** | **PUR 2** | **PUR 3** |
|---|---|---|---|---|
| **Festkörpergehalt [Gew.-%]** | 41,4 | 39,2 | 39,2 | 39,0 |
| **pH-Wert** | 6,9 | 9,1 | 9,1 | 9,6 |
| **PUR A / Kieselsol E-Verhältnis** | ∞ | 3/1 | 2/1 | 1/1 |
| **Mittlere Teilchengröße** | 151 nm | 194 nm | 194 nm | 195 nm |
| **E-Modul (100 %)** | 2,2 MPa | 3,6 MPa | 4,3 MPa | 7,4 MPa |
| **Essigesterquellung** | 295% | 187% | 163 % | 120 % |

Die in Tabelle 1 angeführten Ergebnisse belegen, dass mit zunehmender Kieselsolkonzentration im Vergleich zur nicht modifizierten PUR-Dispersion **A** (Impranil^{®} DLN) eine deutlich verbesserte Chemikalienbeständigkeit sowie verbesserte mechanische Eigenschaften resultieren.

**Tabelle 2: Polyurethan B / Kieselsol Abmischungen mit unterschiedlichen Kieselsoltypen**

| | **PUR B** | **PUR 4a** | **PUR 5** | **PUR 6** | **PUR 7** |
|---|---|---|---|---|---|
| **Festkörpergehalt [Gew.-%]** | 41,0 | 39,0 | 39,0 | 39,0 | 38,9 |
| **pH-Wert** | 6,9 | 9,0 | 8,4 | 9,3 | 9,1 |
| **Kieselsol-Typ** | - | Levasil^{®} 100/30 | Levasil^{®} 200/30 | Levasil^{®} 300/30 | Levasil^{®} VP AC 4038 |
| **PUR/Kieselsol-Verhältnis** | - | 4/1 | 4/1 | 4/1 | 4/1 |
| **E-Modul** | 3,4 Mpa | 3,2 MPa | 3,7 MPa | 5,4 MPa | 3,7 MPa |
| **Essigesterquellung** | 310 % | 295% | 266 % | 295 % | 295 % |

Die Ergebnisse in Tabelle 2 belegen, dass eine Vielzahl unterschiedlicher Kieselsoltypen verwendbar sind.

**Tabelle 3: Polyurethan C / Kieselsol Abmischungen mit unterschiedlichen Kieselsolanteilen**

| | **PUR C (35 %ig)** | **PUR 8** | **PUR 9** | **PUR10** | **PUR 11** |
|---|---|---|---|---|---|
| **Festkörpergehalt [Gew.-%]** | 35,0 | 34,0 | 35,0 | 34,1 | 35,2 |
| **pH-Wert** | 7,47 | 7,69 | 7,77 | 8,46 | 8,92 |
| **PUR C / Kieselsol E-Verhältnis** | ∞ | 4/1 | 3/1 | 2/1 | 1/1 |
| **Mittlere Teilchengröße** | 148,3 | 151,1 | 197,4 | 207,6 | 199,4 |
| **E-Modul (100 %)** | 0,9 | 1,6 | 1,9 | 2,3 | 4,4 |
| **Essigesterquellung** | 120 % | 73 % | 78 % | 48 % | 48 % |

Die in Tabelle 3 angeführten Ergebnisse belegen, dass mit zunehmender Kieselsolkonzentration im Vergleich zur nicht modifizierten PUR-Dispersion **C** (Impranil\1\) DLP) eine deutlich verbesserte Chemikalienbeständigkeit sowie verbesserte mechanische Eigenschaften resultieren.

**Tabelle 4: Wasserdampfdurchlässigkeiten kieselsolmodifizierter PUR-Dispersionen**

| **PUR-Dispersion** | **PUR / Kieselsol-Verhältnis** | **WDD [g/m² d]** |
|---|---|---|
| **PUR A** | ∞ | 1100 |
| **PUR 4b** | 4/1 | 14690 |
| **PUR 1** | 3/1 | 14210 |
| **PUR D** | ∞ | 1120 |
| **PUR 15** | 2/1 | 18000 |

Die Ergebnisse in Tabelle 4 belegen, dass durch die Verwendung der erfindungsgemäßen kieselsolmodifizierten PUR-Dispersionen im Vergleich zu den unmodifizierten Dispersionen (**PUR A** bzw. **PUR D**) sehr viel höhere Wasserdampfdurchlässigkeiten (Faktor 14 - 18) erreicht werden.

### Leder:

### A) Lederzurichtung

### A1) Topcoatprüfung

Für die Topcoatprüfung wurde unzugerichtetes Rind - Möbelnappa nach folgender Rezeptur grundiert.

Das Leder wurde zuerst mit einer Formulierung aus 330 Tl. des Haftgrunds **I** mit 100T1. Isopropanol und 600 Tl. Wasser ( in Kreuz spritzen) vorgrundiert.

Zur Grundierung wird eine Mischung aus 75 Tl. der Farbe **J,** 75 Tl. des trockenstellenden Verlaufshilfsmittels **K;** 50 Tl. des Antiklebemittels **L;** 150 Tl. der Acrylatdispersion **M,** 150 Tl. der PUR - Dispersion **N** und 475 Tl. Wasser hergestellt. Diese Mischung wird zweimal (je ein Kreuz) auf das vorgrundierte Leder gespritzt. Man trocknet 5 min bei 70°C. Das Leder wird hydraulisch gebügelt (80°C, 200 bar, 6 sec) und danach wird ein weiterer Spritzauftrag obiger Mischung (ein Kreuz) appliziert. Nach Trocknung wird erneut gebügelt (80°C, 50 bar, Kissplate).

Auf die so grundierten Leder werden zur Herstellung der Prüflinge Topcoats appliziert.

Die Topcoatformulierungen waren 12% ig in (Kieselsolmodifiziertem) PUR (Trockensubstanz) und enthielten 2,2% Vernetzer **P.** Als Referenz wurde eine 2:1 Abmischung aus Polyurethan **Q** mit dem zur Herstellung der Kieselsol - modifizierten Typen eingesetztem Produkt, sowie das entsprechende reine Produkt eingesetzt. Vor Aufspritzung wurden die Formulierungen mit einem handelsüblichen Verdicker auf eine Auslaufviskosität (DIN cup, 4mm) von 19 sec gestellt.

Die Formulierungen wurden in einer Menge von 5g pro 1/4 Quadratfuß auf die grundierten Leder gespritzt. Danach wurden die Leder 5 min bei 80°C getrocknet und hydraulisch (80°C, 200 bar, 3 sec) gebügelt.

Die Prüflinge wurden auf Reibechtheit und Knickechtheit getestet.

**Tabelle 5 (Lederzurichtung):**

| **Kieselsolmodifizierte PUR-Dispersionen als Topcoat-Binder auf Möbelleder, vernetzt mit Vernetzer P** | | | |
|---|---|---|---|
| Binder | Naßreibungen | Trockenknickungen | Naßknickungen |
| PUR **Q** / PUR **D** (2/1) | 600 / x | 100.000 / xx | 20.000 / o |
| PUR **D** | 40 / xx * | 100.000 / o | 20.000 / o |
| PUR 15 | 530 / x | 100.000 / o | 20.000 / o |
| PUR 16 | 560 / x-xx | 100.000 / o | 20.000 / o |

| | | | |
|---|---|---|---|
| * Der Normtestfilz kann aufgrund der Blockigkeit des Films während des Tests nicht in der Führung des Reibechtheitstesters (Bally-Finishtester) gehalten werden. | | | |

Legende: Bei allen Knickungen und Reibungen gibt die Zahl vor dem Schrägstrich die Anzahl der Knickungen bzw. Reibungen an; das Symbol nach dem Schrägstrich ist eine Bewertung der Beschädigung der Beschichtung: o = unbeschädigt, x = leichte Beschädigung, xx = mittelstarke Beschädigung, xxx = starke Beschädigung

Die in Tabelle 5 angeführten Resultate zeigen, dass bei den erfindungsgemäßen Bindemitteln im Gegensatz zum reinen PUR **D** die für PU typische Blockigkeit wegfällt, ohne physikalische Echtheiten zu verlieren. Im Bereich der Trockenknickungen liegen die erfindungsgemäßen Dispersionen vom Eigenschaftsniveau sogar deutlich über dem Stand der Technik (PUR **Q** / PUR **D** (2/1)).

### A2) Grundierungen mit Kieselsol - modifizierten PUR

Es werden wässrige Formulierungen hergestellt, enthaltend: X % kieselsolmodifizierte PUR; 5 % Farbe **J**; 5 % Mattierungsmittel **O**; 5 % Verlaufshilfsmittel **K.**

Die Einsatzmenge X % der modifizierten PUR wird so bemessen, dass die Formulierungen 12 %ig in Trockensubstanz bezüglich dieser PUR sind. Als Referenz wird eine Grundierung entsprechend mit nicht modifiziertem PUR eingesetzt.

Diese Formulierungen werden mit einem handelsüblichem assoziativen Verdicker auf eine Auslaufviskosität (DIN Becher; Düse 4 mm) von 16 sec. gestellt. Die Formulierungen werden einmal auf unzugerichtetes Rind - Möbelnappa aufgespritzt (10 ml auf 1/2 Quadratfuß) und trocknet 5 min bei 80°C. Man bügelt (Rotopress, 90°C, 6 m/min), und spritzt noch zweimal (mit Zwischentrocknung) die gleichen Formulierungen auf.

Die so grundierten Leder werden auf Kälteknickfestigkeit getestet.

**Tabelle 6 (Lederzurichtung):**

| **Kälteknickresultate kieselsolmodifizierte PUR-Dispersionen als Grundierungsbinder auf Leder** | | |
|---|---|---|
| Binder | Kälteknickungen (10.000) | |
| | Grundierung (-10°C) | Grundierung (-25°C) |
| PUR **D** | o | o |
| PUR 12 | o | o |
| PUR 17 | o | o |
| PUR 13 | o | o |
| PUR 14 | o | o |
| PUR 15 | xx | xx |
| PUR 16 | xx | xx-xxx |

| | | |
|---|---|---|
| Legende: o = unbeschädigt, x = leichte Beschädigung, xx = mittelstarke Beschädigung, xxx = starke Beschädigung | | |

Die in Tabelle 6 angeführten Kälteknickresultate belegen, dass kieselsolmodifizierten PUR-Dispersionen selbst mit einem hohen Anteil an Kieselsolzusatz (PUR 14) als Grundierung geeignet sind und identisch mit dem - zum Vergleich unter identischen Applikationsbedingungen mit getesteten - und den Stand der Technik repräsentierenden - PUR **D**.

### B) Lederbeschichtung

### B1) Lederbeschichtung (LEVACAST)

### Herstellung der Beschichtung:

### 1) Allgemeine Vorgehensweise:

In einem Filmziehgerät, bestehend aus zwei polierten Walzen, die auf einen exakten Abstand eingestellt werden können, wird vor die hintere Walze ein Trennpapier eingelegt. Mit einer Fühlerblattlehre wird der Abstand zwischen Papier und vorderer Walze eingestellt. Dieser Abstand entspricht der Filmdicke (nass) der resultierenden Beschichtung, und kann auf die gewünschte Auflage jedes Striches eingestellt werden. Die Beschichtung ist auch konsekutiv in mehreren Strichen möglich.

Zum Aufbringen der einzelnen Striche werden die Produkte (wässrige Formulierungen werden vorher durch Zugabe von Ammoniak/ Polyacrylsäure auf eine Viskosität von 4500 mPa s gestellt) auf den Spalt zwischen Papier und vorderer Walze gegossen, das Trennpapier wird senkrecht nach unten weggezogen, wobei auf dem Papier der entsprechende Film entsteht. Sollen mehrere Striche aufgebracht werden, wird jeder einzelne Strich getrocknet und das Papier erneut eingelegt.

### 2) Herstellung eines LEVACAST Strichs und Verklebung mit Leder:

In einem Becherglas wird das Bindemittel mit dem Härter 30 sec lang intensiv vermischt. Die Mengenverhältnisse Bindemittel/Härter errechnen sich aus dem gewählten Valverhältnis NCO (Bindemittel)/Amin (Härter) in Kombination mit den für diese Komponenten angegebenen Äquivalenzmengen. Die Mischung wird auf den Spalt zwischen Papier und vorderer Walze gegossen (sie tropft aus Viskositätsgründen nicht durch). Sofort wird das Papier durch den Walzenspalt senkrecht nach unten weggezogen, wobei auf dem Papier der entsprechende Film entsteht. Auf diesen Film wird im noch klebrigen Zustand das Leder (kurzfasriger Chromspalt) aufgelegt und mit einer Gummirolle von Hand mit mäßigem Druck einkaschiert. Danach wird das Muster im Umlufttrockenschrank 5 min bei 80 °C getrocknet. Man kühlt auf Raumtemperatur und zieht das Trennpapier ab. Die so erhaltenen beschichteten Spaltleder werden auf Knickechtheit (DIN 53351 = EN 13334) und Wasserdampfdurchlässigkeit (DIN 53333 = EN 12991) geprüft.

Für die Herstellung der beschichteten Leder gemäß dieser Vorschrift wurden einheitlich folgende Parameter gewählt:

Valverhältnis Bindemittel/Härter = 1,08/1; Filmdicke (naß): 0,2 mm. Diese Parameter entsprechen nahezu den unter produktionstechnischen Bedingungen üblichen.

### Beschichtungsversuche:

### a) Referenz; reine LEVACAST Beschichtung:

Wie oben unter 2 beschrieben, wurde Bindemittel R mit Härter S vermischt und auf dem Trennträger ein Film erzeugt. Der Film wurde mit Leder (kurzfasriger Chromspalt) verklebt; nach Trocknung wurde das beschichtete Leder vom Trennträger abgezogen.

### b) LEVACAST Beschichtungen mit PUR - Deckstrichen:

Wie oben unter 1 beschrieben, wurden Deckstriche hergestellt. Die Spaltbreite wurde so gewählt, dass eine Feststoffauflage von 25 g pro Quadratmeter resultierte (0,07 mm bei 40 % Trockengehalt). Die Deckstriche wurden getrocknet. Als Deckstriche wurden verwendet:
b1) 8 zu 2 - Abmischung aus PUR-Dispersion Q und D (üblicher Deckstrich);
b2) reine PUR-Dispersion D als Vergleich zu b3, wegen extrem blockigem Griff als solcher ungeeignet;
b3) PUR 15

Danach wurden mit den Deckstrichen beschichteten Papiere erneut eingelegt und wie unter a) beschrieben mit LEVACAST beschichtet und mit Leder verklebt. Die so erhaltenen Prüfkörper wurden auf Knickechtheiten und Wasserdampfdurchlässigkeit getestet (Tabelle 7).

**Tabelle 7 (Lederbeschichtung)**

| **Vergleich LEVACAST - beschichteter Leder mit verschiedenen Deckstrichen** | | | | |
|---|---|---|---|---|
| | **Trockenknick.** | **Naßknick.** | **-10 °C Knick.** | **WDD** |
| **Kein Deckstrich** | **100 000 / o** | **20 000 / o** | **20 000 / o** | **1,6** |
| **Deckstrich b1** | **80 000 / o -x** | **20 000 / o** | **20 000 / o-x** | **0,6** |
| **Deckstrich b2** | **100 000 / o** | **20 000 / o** | **20 000 / o** | **0,8** |
| **Deckstrich b3** | **90 000 / o-x** | **20 000 / o** | **20 000 / o** | **1,4** |

Der mit Deckstrich b3 erhaltene Griff ist gleitend und entspricht dem des üblicherweise verwendetem Deckstrichs b1.

Die WDD - Zahlen verstehen sich in mg / cm² h.

## Patentansprüche

1. Verwendung von wässrigen, kieselsolmodifizierten PUR-Dispersionen aus einer Kombination von
A) 40 - 95 % einer nicht alkoxysilanmodifizierten PUR-Dispersion, und
B) 5 - 60 % einer Kieselsol Dispersion
wobei gilt, dass die Prozentangaben sich auf das Gewicht nichtflüchtiger Anteile beziehen und zu 100 Gew.-% addieren zur Herstellung wasserdampf durchlässiger Beschichtungen.

2. Verwendung gemäß Anspruch 1, **dadurch gekennzeichnet, dass** wässrige, kieselsolmodifizierte PUR-Dispersionen aus einer Kombination von
A) 50 - 90 % einer nicht alkoxysilanmodifizierten PUR-Dispersion, und
B) 10 - 50 % einer Kieselsol Dispersion
wobei gilt, dass die Prozentangaben sich auf das Gewicht nichtflüchtiger Anteile beziehen und zu 100 Gew.-% addieren, eingesetzt werden.

3. Verwendung gemäß Ansprüchen 1 und 2, **dadurch gekennzeichnet, dass** wässrige, kieselsolmodifizierte PUR-Dispersionen aus einer Kombination von
A) 60 - 85 % einer nicht alkoxysilanmodifizierten PUR-Dispersion, und
B) 15 - 40 % einer Kieselsol Dispersion
wobei gilt, dass die Prozentangaben sich auf das Gewicht nichtflüchtiger Anteile beziehen und zu 100 Gew.-% addieren, eingesetzt werden.

4. Verwendung gemäß Ansprüchen 1 bis 3, **dadurch gekennzeichnet, dass** die Beschichtungen auf Substraten erzeugt werden.

5. Verwendung gemäß Ansprüchen 1 bis 4, **dadurch gekennzeichnet, dass** es sich bei den Substraten um flexible Substrate handelt.

6. Verwendung gemäß Ansprüchen 1 bis 5, **dadurch gekennzeichnet, dass** es sich bei den flexiblen Substraten um Textilien handelt.

7. Verwendung gemäß Ansprüchen 1 bis 5, **dadurch gekennzeichnet, dass** es sich bei den flexiblen Substraten um Leder handelt.

8. Verwendung gemäß Ansprüchen 1 bis 4, **dadurch gekennzeichnet, dass** es sich bei den Substraten um solche mit mineralischen Oberflächen handelt.

9. Verwendung gemäß Ansprüchen 1 bis 8, **dadurch gekennzeichnet, dass** die wässrigen, kieselsolmodifizierten PUR-Dispersionen als weitere Komponente aus der Lacktechnologie bekannte Hilfs- und Zusatzmittel ausgewählt aus der Gruppe bestehend aus nichtionischen und/oder anionischen Verdicktern, Füllstoffen, Pigmenten, Wachsen, Griffmitteln, Farbstoffen, Lösungsmitteln, Verlaufshilfsmitteln enthält.

## Claims

1. Use of aqueous, silica sol-modified PU dispersions consisting of a combination of
A) 40 - 95% of a non-alkoxysilane-modified PU dispersion, and
B) 5 - 60% of a silica sol dispersion,
wherein the percentages relate to the weight of non-volatile components and add up to 100 wt.%, for the production of water vapour-permeable coatings.

2. Use according to claim 1, **characterised in that** aqueous, silica sol-modified PU dispersions consisting of a combination of
A) 50 - 90% of a non-alkoxysilane-modified PU dispersion, and
B) 10 - 50% of a silica sol dispersion,
wherein the percentages relate to the weight of non-volatile components and add up to 100 wt.%, are used.

3. Use according to claims 1 and 2, **characterised in that** aqueous, silica sol-modified PU dispersions consisting of a combination of
A) 60 - 85% of a non-alkoxysilane-modified PU dispersion, and
B) 15 - 40% of a silica sol dispersion,
wherein the percentages relate to the weight of non-volatile components and add up to 100 wt.%, are used.

4. Use according to claims 1 to 3, **characterised in that** the coatings are produced on substrates.

5. Use according to claims 1 to 4, **characterised in that** the substrates are flexible substrates.

6. Use according to claims 1 to 5, **characterised in that** the flexible substrates are textiles.

7. Use according to claims 1 to 5, **characterised in that** the flexible substrates are leather.

8. Use according to claims 1 to 4, **characterised in that** the substrates are those having mineral surfaces.

9. Use according to claims 1 to 8, **characterised in that** the aqueous, silica sol-modified PU dispersions contain as an additional component from paint technology known auxiliary agents and additives selected from the group consisting of non-ionic and/or anionic thickeners, fillers, pigments, waxes, touch modifiers, dyes, solvents, flow control agents.

## Revendications

1. Utilisation de dispersions PUR aqueuses, modifiées par un sol de silice, constituées d'une combinaison de:
A) 40 -95% d'une dispersion PUR non modifiée par un alcoxysilane, et
B) 5 - 60% d'une dispersion de sol de silice,
dans laquelle les données en pourcentage se rapportent au poids de la proportion non volatile et s'additionnent pour faire 100% en poids, pour la préparation de revêtements perméables à la vapeur d'eau.

2. Utilisation selon la revendication 1, **caractérisée en ce que** l'on met en oeuvre des dispersions PUR aqueuses, modifiées par un sol de silice, constituées d'une combinaison de :
A) 50 - 90% d'une dispersion PUR non modifiée par un alcoxysilane, et
B) 10 - 50% d'une dispersion de sol de silice,
dans laquelle les données en pourcentage se rapportent au poids de la proportion non volatile et s'additionnent pour faire 100% en poids.

3. Utilisation selon les revendications 1 et 2, **caractérisée en ce que** l'on met en oeuvre des dispersions PUR aqueuses, modifiées par un sol de silice, constituées d'une combinaison de :
A) 60 - 85% d'une dispersion PUR non modifiée par un alcoxysilane, et
B) 15 - 40% d'une dispersion de sol de silice,
dans laquelle les données en pourcentage se rapportent au poids de la proportion non volatile et s'additionnent pour faire 100% en poids.

4. Utilisation selon les revendications 1 à 3, **caractérisée en ce que** les revêtements sont produits sur les substrats.

5. Utilisation selon les revendications 1 à 4, **caractérisée en ce que** les substrats consistent en des substrats flexibles.

6. Utilisation selon les revendications 1 à 5, **caractérisée en ce que** les substrats flexibles consistent en des textiles.

7. Utilisation selon les revendications 1 à 5, **caractérisée en ce que** les substrats flexibles consistent en du cuir.

8. Utilisation selon les revendications 1 à 4, **caractérisée en ce que** les substrats consistent en ceux avec des surfaces minérales.

9. Utilisation selon les revendications 1 à 8, **caractérisée en ce que** les dispersions PUR aqueuses, modifiées par un sol de silice contiennent comme autre composant, les auxiliaires et additifs connus dans les technologie des laques, choisis parmi le groupe consistant en des épaississants non ioniques et/ou anioniques, des charges, des pigments, des cires, des agents anti-dérapant, des colorants, des solvants, des agents nivelants.
